# EUROPÄISCHE PATENTSCHRIFT

(11) **EP 2 917 260 B1**
(45) Veröffentlichungstag und Bekanntmachung des Hinweises auf die Patenterteilung: **07.09.2016**
(21) Anmeldenummer: 13789283.2
(22) Anmeldetag: 08.11.2013
(51) Int. Cl.: C08G 59/40, C08G 59/50, C08G 59/56, C09J 163/00

(54) **AMINZUSAMMENSETZUNG FÜR EINEN CRASHFESTEN 2K EPOXYKLEBSTOFF**
AMINE COMPOSITION FOR A CRASH-PROOF TWO-COMPONENT EPOXY ADHESIVE
COMPOSITION D'AMINE POUR COLLE ÉPOXY BI-COMPOSANT RÉSISTANTE AUX CRASH-TESTS

(30) Priorität: 12.11.2012 EP 12192269
(43) Veröffentlichungstag der Anmeldung: 16.09.2015
(73) Patentinhaber: Sika Technology AG, 6340 Baar (CH)
(72) Erfinder: HOFSTETTER, David, CH-8405 Winterthur (CH); VOCI, Tina, CH-8050 Zürich (CH); SCHULENBURG, Jan Olaf, CH-8610 Uster (CH)
(74) Vertreter: Sika Patent Attorneys
(86) Internationale Anmeldenummer: PCT/EP2013/073338
(87) Internationale Veröffentlichungsnummer: WO 2014/072449

(56) Entgegenhaltungen:
- EP-A1- 0 659 833
- WO-A1-00/01659
- DE-A1-102009 045 903
- US-A1- 2007 287 767

## Beschreibung

### Technisches Gebiet

Die Erfindung betrifft eine Härterkomponente für einen zweikomponentigen Epoxyklebstoff aus einer Komponente A umfassend ein Epoxidharz und einer Härterkomponente B, einen zweikomponentigen Epoxyklebstoff umfassend die Härterkomponente und die Verwendung der Härterkomponente in einen zweikomponentigen Epoxyklebstoff.

### Stand der Technik

In der Fertigung sowohl von Fahrzeugen und Anbauteilen oder auch Maschinen und Geräten werden anstelle oder in Kombination mit herkömmlichen Fügeverfahren wie Schrauben, Nieten, Stanzen oder Schweißen immer häufiger hochwertige Klebstoffe eingesetzt. Werden strukturelle Teile verklebt, sind eine hohe Festigkeit und Schlagzähigkeit des Klebstoffes von größter Wichtigkeit.

Im Fahrzeugbau und im Bereich der Fahrzeugreparatur haben sich hitzehärtende Epoxidklebstoffe etabliert, die üblicherweise bei Temperaturen von über 100°C und manchmal bis zu 210°C gehärtet werden. Oftmals ist deren Verwendung jedoch unvorteilhaft, beispielsweise bei der Reparatur von Fahrzeugen in Werkstätten, die über die notwendigen Einrichtungen zum Hitzehärten nicht verfügen. Daneben findet die Reparatur von Fahrzeugen - im Gegensatz zu deren Herstellung - bereits am vollständig ausgerüsteten Fahrzeug statt, so dass möglicherweise hitzeempfindliche Materialien in Mitleidenschaft gezogen werden können.

Die Klebstoffe für den Rohbau sollen unter den üblichen Einbrenribedingungen von idealerweise 30 Min. bei 180 °C aushärten. Des Weiteren sollen sie aber auch bis etwa 220 °C beständig sein. Weitere Anforderungen für einen solchen gehärteten Klebstoff beziehungsweise der Verklebung sind die Gewährleistung der Betriebssicherheit sowohl bei hohen Temperaturen bis etwa 90 °C als auch bei tiefen Temperaturen bis etwa -40 °C.

Herkömmliche Epoxidklebstoffe zeichnen sich zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl große Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber bei tiefen Temperaturen (z.B. < -10°C).

In der Literatur werden im Wesentlichen zwei Methoden vorgeschlagen, wie die Sprödigkeit von Epoxidklebstoffen reduziert und damit die Schlagzähigkeit erhöht werden kann: Einerseits kann das Ziel durch die Beimengung von zumindest teilvernetzten hochmolekularen Verbindungen wie Latices von Kern/Schale-Polymeren oder durch sich bei der Aushärtung in sehr kleinen Domänen abscheidende flexible Polymere oder Copolymere als Schlagzähigkeitsmodifikatoren (Toughener) erreicht werden. Andererseits kann auch durch Einführung von Weichsegmenten, z.B. durch die entsprechende Modifizierung der Epoxidkomponenten, eine gewisse Flexibilität erreicht werden.

WO 2004/055092 A1 beschreibt hitzehärtbare Epoxidharzzusammensetzungen mit verbesserter Schlagzähigkeit durch Verwendung eines Epoxidgruppen-terminierten Schlagzähigkeitsmodifikators im Epoxidkleber, wobei der Schlagzähigkeitsmodifikator durch Umsetzung von einem Isocyanat-terminierten Präpolymer mit einem Epoxidharz, das eine primäre oder sekundäre Hydroxygruppe enthaltende Epoxidverbindung-erhalten wird.

WO 2005/007720 A1 beschreibt Epoxidgruppen-terminierte Schlagzähigkeitsmodifikatoren, die durch Umsetzung von einem Isocyanat-terminierten Präpolymer mit Hydroxygruppen tragende Epoxidverbindungen erhalten werden, wobei der Schlagzähigkeitsmodifikator mindestens ein aromatisches Strukturelement aufweist, welches über Urethangruppen in die Polymerkette eingebunden ist.

Der Einsatz von zwei oder mehr verschiedenen Aminen als Härter in der Härterkomponente von strukturellen zweikomponentigen Epoxyklebstoffen ist bekannt. Es wird in der Regel mehr als ein Amin eingesetzt, um verschiedene Eigenschaften zu erzielen, z.B. um die Elastizität des gehärteten Klebstoffs zu erhöhen.

In US 2009/0048730 A1 werden zweikomponentige Epoxyklebstoffe umfassend ein Epoxidharz und einen Schlagzähigkeitsmodifikator beschrieben, in denen die Härterkomponente eine Aminzusammensetzung ist, die B1) 15 bis 40 % eines primären oder sekundären Amin-terminierten Polyethers, B2) 4 bis 40% eines primären oder sekundären Amin-terminierten Kautschuks mit einer Glasübergangstemperatur von -40°C oder weniger und B3) 10 bis 30% eines primären oder sekundären Amin-terminiertes Polyamids mit einem Schmelzpunkt unter 50°C enthält. Die gehärteten Klebstoffe gemäß den Beispielen zeigen einen Schlagschälwiderstand um 20 N/mm und eine Zugscherfestigkeit (ZSF) <20MPa.

Mit den zweikomponentigen (2K) Epoxyklebstoffe nach dem Stand der Technik wird zwar eine recht gute Crashfestigkeit (Zähigkeit) erreicht, diese liegt aber nicht auf dem Niveau eines heißhärtenden einkomponentigen (1K) Epoxyklebstoffs. Zudem ist die Festigkeit des 2K Klebstoffs geringer.

WO 00/01659 A1 betrifft spezielle Phenalkamine als Härter für Epoxidharzzusammensetzungen.

In US 2007/287767 A1 wird ein Verfahren zum Aufbereiten einer Erdformation beschrieben, bei dem Derivate der Extrakte aus Cashewnussöl als lipophile Monomere und ein Vernetzungsmittel umfassend ein primäres Amin in die Erdformation eingespritzt werden, wobei das Amin ein Polyetheramin oder ein Phenalkamin sein kann.

DE 102009045903 A1 beschreibt eine zweikomponentige härtbare Masse enthaltend mindestens ein Epoxid, mindestens einen Härter für das Epoxid, Partikel mit Kern-Schale-Struktur und mindestens einen aliphatischen Polyalkylenether, der an jedem Kettenende eine Aminogruppe trägt.

EP 0659833 A1 betrifft Zusammensetzungen, enthaltend ein Epoxidharz und einen Zähigkeitsvermittler sowie ein Härtungsmittelgemisch bestehend aus Dicyandiamid, einem cycloaliphatischen Polyamin und einem Polyoxyalkylenamin.

### Darstellung der Erfindung

Aufgabe der vorliegenden Erfindung ist die Bereitstellung eines 2K Klebstoffs, der die gleichen oder zumindest ähnliche Eigenschaften wie ein heißhärtender 1K crashfester, struktureller Klebstoff haben soll. Die 2K Klebstoffe sollen als Reparaturanwendung dort eingesetzt werden können, wo im Originalverbund 1K heißhärtende Klebstoffe eingesetzt werden. Der 2K Klebstoff unterscheidet sich dabei u.a. in 2 Punkten. 1. Der Klebstoff bedarf keiner Hitzehärtung, sondern härtet bei Raumtemperatur und kann gegebenenfalls bei Temperaturen bis 100°C nachgehärtet werden. 2. Der Klebstoff wird in der Regel nicht auf beölten Untergründen eingesetzt. Der Kleber soll nach der Härtung strukturell und crashfest sein und eine gute mechanische Festigkeit aufweisen.

Die Aufgabe konnte überraschenderweise durch eine Härterkomponente für einen zweikomponentigen Epoxyklebstoff aus einer Komponente A umfassend ein Epoxidharz und einer Härterkomponente B gelöst werden, wobei die Härterkomponente B1) mindestens ein aliphatisches acyclisches Polyetheramin mit mindestens 2 Aminogruppen und B2) mindestens ein Polyamin ausgewählt aus einem Phenalkamin oder einem aliphatischen Polyetheramin, das mindestens ein acyclisches Alkoxylatsegment und mindestens ein cycloaliphatisches Segment enthält, sowie gegebenenfalls B3) mindestens eine Aminverbindung ausgewählt aus einem Amin-terminierten Kautschuk, einem Amin-terminierten Poly(tetramethylenetherglycol) und einem Amin-terminierten Poly(tetramethylenetherglycol)-Poly(propylenglycol)-Copolymer umfasst.

Mit der erfindungsgemäßen Härterkomponente in einem 2K Epoxyklebstoff kann ein gehärtete Klebstoffmasse erhalten werden, die strukturell und crashfest ist und eine gute mechanische Festigkeit aufweist. Im folgenden wird die Erfindung ausführlich erläutert.

Präpolymere sind oligomere oder auch bereits selbst polymere Verbindungen, die als Vor- oder Zwischenprodukte zur Synthese von höhermolekularen Substanzen dienen. Die Vorsilbe Poly in Ausdrücken wie Polyol, Polyether oder Polyisocyanat bedeutet, dass die Verbindung zwei oder mehr der genannten Gruppen aufweist, ein Polyamin ist somit eine Verbindung mit zwei oder mehr Aminogruppen. Ein Polyetheramin ist eine Verbindung mit zwei oder mehr Ethergruppen. Der Ausdruck "unabhängig voneinander" in Zusammenhang mit Substituenten, Reste oder Gruppen bedeutet, dass in demselben Molekül die gleich bezeichneten Substituenten, Resten oder Gruppen gleichzeitig mit unterschiedlicher Bedeutung auftreten können.

Die Härterkomponente für einen zweikomponentigen Epoxyklebstoff aus einer Komponente A umfassend ein Epoxidharz und einer Härterkomponente B umfasst B1) ein oder mehrere aliphatische acyclische Polyetheramine mit mindestens 2 Aminogruppen. Das aliphatische acyclische Polyetheramin weist insbesondere mindestens 2 primäre oder sekundäre Aminogruppen auf, wobei primäre Aminogruppen bevorzugt sind. Es handelt sich bevorzugt um ein Polyetheramin mit 2 oder 3 Aminogruppen, besonders bevorzugt um ein Polyetheramin mit 2 Aminogruppen. Besonders bevorzugt handelt es sich bei dem aliphatischen acyclischen Polyetheramin um ein primäres Diamin. Solche Polyetheramine sind im Handel erhältlich. Das aliphatische acyclische Polyetheramin beinhaltet bevorzugt Ethoxylat- und/oder Propoxylatgruppen.

Das aliphatische acyclische Polyetheramin ist bevorzugt eine relativ kleine Polyaminverbindung. Bevorzugt ist z.B. ein aliphatisches acyclisches Polyetheramin mit einem Molekulargewicht von nicht mehr als 320 und besonders bevorzugt nicht mehr als 240.

Bevorzugte Beispiele für das aliphatische acyclische Polyetheramin B1 sind 4,7-Dioxaoctan-1,10-diamin (Jeffamine^{®}EDR 176 von Huntsman), 3,6-Dioxaoctan-1,8-diamin (Jeffamine^{®}EDR 148 von Huntsman), 4,7-Dioxadecan-1,10-diamin, 4,7-Dioxadecan-2,9-diamin, 4,9-Dioxadodecan-1,12-diamin (erhältlich als Baxxadur^{®}EC280 von Bayer), 5,8-Dioxadodecan-3,10-diamin, 4,7,10-Trioxatridecan-1,13-diamin (erhältlich als Ancamine^{®}1922A von Air Products oder als Baxxa-dur^{®}EC130 von Bayer) und höhere Oligomere dieser Diamine.

Die Härterkomponente für einen zweikomponentigen Epoxyklebstoff aus einer Komponente A umfassend ein Epoxidharz und einer Härterkomponente B umfasst ferner B2) ein oder mehrere Polyamine ausgewählt aus einem Phenalkamin und einem aliphatischen Polyetheramin, das mindestens ein acyclisches Alkoxylatsegment und mindestens ein cycloaliphatisches Segment enthält.

Phenalkamine sind Phenolalkanamine, deren Verwendung als Epoxidhärter bekannt ist und die im Handel erhältlich sind. Es handelt sich in der Regel um halbsynthetische Produkte, die auf Kondensationsprodukten von Cardanol z.B. mit aliphatischen Aminen bzw. Polyaminen, z.B. Ethylendiamin oder Diethyltriamin, und Aldehyden wie Formaldehyd (Mannich-Basen) basieren. Cardanol ist ein Alkylphenol und Hauptbestandteil von einem Öl aus Cashewnussschalen (CNSL). Beispiele für Handelsprodukte sind z.B. Lapox^{®} Phenalkamine von Bodo Möller Chemie, Aradur^{®}3460, Aradur^{®}3440 oder Aradur^{®}3442 von Huntsman oder die Paladin-Typen wie PPA-7090, PPA-7124, PPA-7125 und PPA-7140. Eine Reihe von Phenalkamin-Härtern ist auch von Cardolite erhältlich, z.B. unter der Bezeichnung NC-540, NC-541LV und LITE 2001.

Alternativ kann als Polyamin B2) ein aliphatisches Polyetheramin eingesetzt werden, das mindestens ein acyclisches Alkoxylatsegment und mindestens ein cycloaliphatisches Segment enthält. Das mindestens eine acyclische Alkoxylatsegment kann eine oder mehrere Ethoxylatgruppen, eine oder mehrere Propoxylatgruppen oder eine Mischung von Ethoxylat-, Butoxylat- und Propoxylatgruppen sein. Bevorzugt enthält das aliphatische Polyetheramin Propoxylatgruppen. Bei dem cycloaliphatischen Segment kann es sich um eine oder mehrere cycloaliphatische Gruppen handeln. Das cycloaliphatische Segment ist vorzugsweise in der Hauptkette des Polyetheramins, kann aber auch in einer Seitenkette angeordnet sein. Beispiele für das cycloaliphatische Segment sind Cyclopentyl, Cyclohexyl und Bicyclo[4.4.0]decanyl. Es handelt sich bevorzugt um ein Amin-terminiertes cycloaliphatisches Ethoxylat und besonders bevorzugt um ein Amin-terminiertes cycloaliphatisches Propoxylat. Auch diese Verbindungen sind im Handel erhältlich, z.B. als Jeffamine^{®}RFD-270 von Huntsman.

Die Härterkomponente für einen zweikomponentigen Epoxyklebstoff aus einer Komponente A umfassend ein Epoxidharz und einer Härterkomponente B kann gegebenenfalls eine dritte Aminkomponente B3) enthalten. Bei der optionalen Aminkomponente B3) kann es sich um eine oder mehrere Aminverbindungen ausgewählt aus einem Amin-terminierten Kautschuk, einem Amin-terminierten Poly(tetramethy-lenetherglycol) und einem Amin-terminierten Poly(tetramethylenetherglycol)-Poly-(propylenglycol)-Copolymer handeln. Auch bei diesen Verbindungen handelt es sich um übliche Härterkomponenten, die im Handel erhältlich sind.

Amin-terminierte Kautschuke sind z.B. Homopolymere oder Copolymere von einem oder mehreren konjugierten Dienen mit Aminoendgruppen, bevorzugt sind Dien/ Nitril-Copolymere. Das Dien ist bevorzugt Butadien oder Isopren, bevorzugt Butadien. Das bevorzugte Nitril ist Acrylnitril. Bevorzugt handelt es sich um Butadien/Acrylnitril-Copolymere.

Bei den Amingruppen handelt es sich bevorzugt um primäre oder sekundäre Amingruppen. Die Anzahl der Aminogruppen und das Molekulargewicht des Kautschuks können in breiten Bereichen variieren. Der Amin-terminierte Kautschuk enthält z.B. etwa 1, bevorzugt mehr als 1, bevorzugter mehr als 1,5 und bevorzugt nicht mehr als 2,5 primäre oder sekundäre Aminogruppen pro Molekül im Mittel. Das Gewichtsmittel des Molekulargewichts, bestimmt nach GPC, kann z.B. im Bereich von 2000 bis 6000 liegen. Typische Handelsprodukte für diese Amin-terminierten Kautschuke sind die verschiedenen ATBN^{®}-Produkte von Emerald Performance Materials, z.B. ATBN^{®} 1300X16 oder analoge Produkte.

Als optionale dritte Aminkomponente kann überraschenderweise anstelle des Amin-terminierten Kautschuks alternativ auch Amin-terminiertes Poly(tetramethylenether-glycol) oder Amin-terminiertes Poly(tetramethylenetherglycol)-Poly(propylenglycol)-Copolymer eingesetzt werden. Auch diese werden kommerziell vertrieben. Ein käufliches Amin-terminiertes Poly(tetramethylenetherglycol) ist z.B. Jeffamine^{®}THF-170. Ein käufliches Amin-terminiertes Poly(tetramethylenetherglycol)-Poly(propylenglycol)-Copolymer ist z.B. Jeffamine^{®}THF-100.

In der Härterkomponente kann das Gewichtsverhältnis der Aminkomponente B1, d.h. mindestens eines aliphatischen acyclischen Polyetheramins mit mindestens 2 Aminogruppen, zur Aminkomponente B2, d.h. mindestens eines Polyamins ausgewählt aus einem Phenalkamin und einem aliphatischen Polyetheramin, das mindestens ein acyclisches Alkoxylatsegment und mindestens ein cycloaliphatisches Segment enthält, in breiten Bereichen variieren. Beispielsweise kann das Gewichtsverhältnis der Aminkomponente B1 zur Aminkomponte B2 in der Härterkomponente B im Bereich von 2:1 bis 1:3, bevorzugt von von 2:1 bis 1:2 und besonders bevorzugt von 1:1 bis 1:2 liegen.

Die genannten Amine B1 bis B3 können auch in Form von einem Addukt mit einem Epoxidharz eingesetzt werden. Solche Addukte und deren Einsatz in einer Härterkomponente sind dem Fachmann allgemein bekannt. Als Epoxidharze zur Herstellung der Addukte eignen sich alle üblichen und hier beschriebenen Epoxidharze. Sofern solche Epoxidharz-Addukte eingesetzt werden, wird der Epoxidharz-Anteil für die in der vorliegenden Anmeldung aufgeführten Anteile bzw. Verhältnisse der jeweiligen Amine nicht berücksichtigt.

In der Härterkomponente können neben den zwingenden Aminkomponenten B1 und B2 sowie der optionalen Härterkomponente B3 gegebenenfalls ein oder mehrere Zusatzstoffe enthalten sein, die für solche Härterkomponenten üblich sein. Beispiele für solche üblichen Zusatzstoffe sind weitere Aminkomponenten als Härter, Füllstoffe, Thixotropieadditive, Haftvermittler, Schlagzähigkeitsmodifizierer, Beschleunigern und weitere Additive.

Als Zusatzstoffe wie Füllstoffe, Thixotropieadditive, Haftvermittler, Schlagzähigkeitsmodifizierer und weitere Additive eignen sich prinzipiell alle, die auch der das Epoxidharz enthaltenden Komponente A zugesetzt werden können. Es wird daher auf die nachfolgende Beschreibung und die nachfolgenden Beispiele für diese Zusatzstoffe für die das Epoxidharz enthaltenden Komponente A verwiesen, die in gleicher Weise für diese Zusatzstoffe in der Härterkomponente gelten, sofern nicht ausdrücklich anders angegeben. Als bei Bedarf einzusetzender Beschleuniger kann jeder verwendet, der in der Technik gewöhnlich verwendet wird. Solche Beschleuniger sind im Handel erhältlich.

Beispiele für Beschleuniger, welche die Reaktion zwischen Aminogruppen und Epoxidgruppen beschleunigen, sind z.B. Säuren oder zu Säuren hydrolysierbare Verbindungen, z.B. organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie beispielsweise Phosphorsäure, oder Mischungen der vorgenannten Säuren und Säureester; tertiäre Amine wie 1,4- Diaza-bicyclo[2.2.2]octan, Benzyldimethylamin, α-Methylbenzyldimethylamin, Triethanolamin, Dimethylaminopropylamin, Salze solcher tertiärer Amine, quaternäre Ammoniumsalze, wie z.B. Benzyltrimethylammoniumchlorid, Phenole, insbesondere Bisphenole, Phenol-Harze und Mannich-Basen wie z.B. 2-(Dimethylaminomethyl)phenol und 2,4,6-Tris-(dimethylaminomethyl)phenol, Phosphite wie z.B. Di- und Triphenylphosphite, sowie Mercaptogruppen aufweisende Verbindungen.

Die erfindungsgemäße Härterkomponente eignet sich als Härterkomponente in einem zweikomponentigen Epoxyklebstoff aus einer Komponente A umfassend ein Epoxidharz und einer Härterkomponente B. Die Komponente A des zweikomponentigen Epoxyklebstoffs umfasst ein oder mehrere Epoxidharze. Die Komponente A umfasst ferner bevorzugt einen oder mehrere Schlagzähigkeitsmodifikatoren. Die Komponente A kann ferner gegebenenfalls weitere Zusatzstoffe enthalten, wie sie für Epoxyharzkleber üblich sind. Beispiele für optionale Zusatzstoffe sind Füllstoffe, Thixotropieadditive und Haftvermittlern und weitere Additive.

In einer bevorzugten Ausführungsform weist die Härterkomponente folgende Zusammensetzung auf:
10 bis 20 Gew.-% aliphatisches acyclisches Polyetheramin B1),
15 bis 40 Gew.-% Polyamin B2),
0 bis 20 Gew.-% Aminverbindung B3), bevorzugt 5 bis 20 Gew.-%,
0 bis 50 Gew.-% Füllstoffe und/oder Thixotropieadditive, bevorzugt 5 bis 50 Gew.-%
0 bis 5 Gew.-% Haftvermittler und/oder weitere Additive und
0 bis 5 Gew.-% Beschleuniger, bevorzugt 2 bis 5 Gew.-%.

Dies bevorzugte Härterkomponente kann mit jeder Epoxidharz enthaltenden Komponente A als zweikomponentiger Epoxyklebstoff eingesetzt werden. Bevorzugt wird die Härterkomponente, insbesondere die bevorzugte Härterkomponente mit der vorstehend aufgeführten Zusammensetzung, mit einer Komponente A eingesetzt, die folgende Komponenten aufweist
40 bis 80 Gew.-% mindestens eines Epoxidharzes,
5 bis 40 Gew.-% mindestens eines Schlagzähigkeitsmodifikators,
0 bis 50 Gew.-% Füllstoffe und/oder Thixotropieadditive, bevorzugt 5 bis 50 Gew.-%, und
0 bis 5 Gew.-% Haftvermittler und/oder weitere Additive.

Im folgenden werden die Komponenten und möglichen Zusatzstoffe ausführlicher beschrieben. Sofern nicht anders angegeben, gelten die folgenden Ausführungen sowohl für die Härterkomponente als auch für die Komponente A.

Das Epoxidharz in der Epoxidharzkomponente A weist bevorzugt durchschnittlich mehr als eine Epoxidgruppe pro Molekül auf. Das Epoxidharz ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Zweckmäßige Epoxid-Flüssigharze oder Epoxid-Festharze sind z.B. die Diglycidylether der Formel (I) 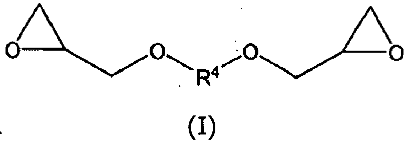 worin R⁴ für einen zweiwertigen aliphatischen oder einkernigen aromatischen oder einen zweikernigen aromatischen Rest steht.

Beispiele für Diglycidylether der Formel (I) sind
- Diglycidylether von difunktionellen gesättigten oder ungesättigten, verzweigten oder unverzweigten, zyklischen oder offenkettigen C₂-C₃₀-Alkoholen, wie z.B. Ethylenglykol-, Butandiol-, Hexandiol-, Oktandiolgylcidylether, Cyclohexandimethanol-digylcidylether, Neopentylglycoldiglycidylether;
- Diglycidylether von difunktionellen, nieder- bis hochmolekularen Polyetherpolyolen wie z.B. Polyethylenglycol-diglycidylether, Polypropyleneglycol-diglycidylether;
- Diglycidylether von difunktionellen Diphenolen und gegebenenfalls Triphenolen, wobei hierunter nicht nur reine Phenole, sondern gegebenenfalls auch substituierte Phenole verstanden werden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen. Als Bisphenole und gegebenenfalls Triphenolen sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-Bis(p-hydroxyphenyl)-phthalide, 5,5-Bis(4-hydroxyphenyl)hexahydro-4,7-methanoindan, Phenolpthalein, Fluorescein, 4,4'-[Bis-(hydroxyphenyl)-1,3-phenylenebis-(1-methyl-ethyliden)] (=Bisphenol-M), 4,4'-[Bis-(hydroxyphenyl)-1,4-phenylenebis-(1-methyl-ethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

Bevorzugte Epoxid-Festharze weisen die Formel (II) auf

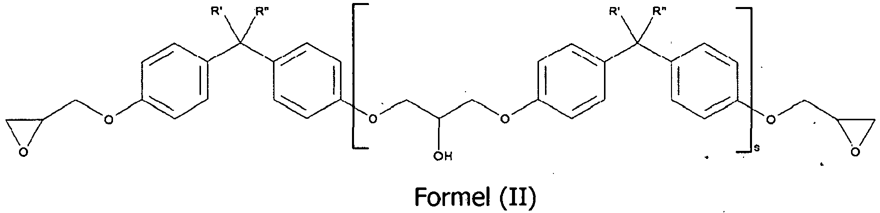

Hierbei stehen die Substituenten R' und R" unabhängig voneinander entweder für H oder CH₃. Weiterhin steht der Index s für einen Wert von > 1,5, insbesondere von 2 bis 12.

Derartige Epoxid-Festharze sind kommerziell erhältlich, beispielsweise von Dow oder Huntsman oder Hexion.

Verbindungen der Formel (II) mit einem Index s zwischen 1 und 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn,-d.h. wo der Index s einen Wert von > 1,5 aufweist.

Bevorzugte Epoxid-Flüssigharze weisen die Formel (III) auf

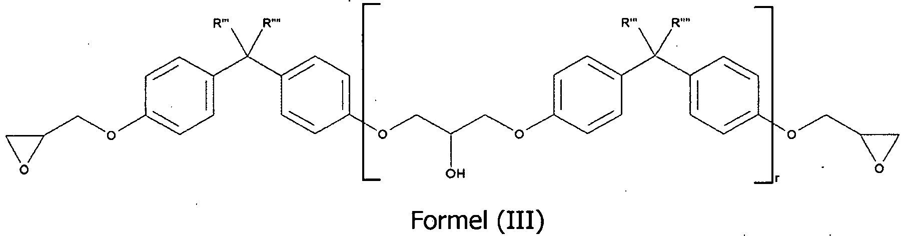

Hierbei stehen die Substituenten R"' und R"" unabhängig voneinander entweder für H oder CH₃. Weiterhin steht der Index r für einen Wert von 0 bis 1. Bevorzugt steht r für einen Wert von kleiner als 0,2.

Es handelt sich somit vorzugsweise um Diglycidylether von Bisphenol-A (DGEBA), von Bisphenol-F sowie von Bisphenol-A/F. Die Bezeichnung A/F verweist hierbei auf eine Mischung von Aceton mit Formaldehyd, welche als Edukt bei dessen Herstellung verwendet wird. Solche Flüssigharze sind beispielsweise als Araldite^{®} GY 250, Araldite^{®} PY 304, Araldite^{®} GY 282 (Huntsman) oder D.E.R.^{®} 331 oder D.E.R.^{®} 330 (Dow) oder Epikote^{®} 828 (Hexion) erhältlich.

Weiterhin geeignet als Epoxidharz A sind sogenannte Novolake. Diese weisen insbesondere die folgende Formel auf: 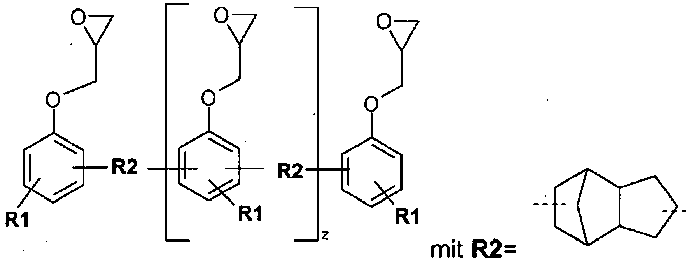 oder CH₂, R1 = H oder Methyl und z = 0 bis 7.

Insbesondere handelt es sich hierbei um Phenol- oder Kresol-Novolake (R2 = CH₂). Solche Epoxidharze sind unter dem Handelnamen EPN oder ECN sowie Tactix^{®}556 von Huntsman oder unter der Produktreihe D.E.N.^{®} von Dow Chemical kommerziell erhältlich.

Es können ein oder mehrere Schlagzähigkeitsmodifikatoren in der Komponent A und gegebenenfalls in der Härterkomponente B eingesetzt werden. Der Einsatz solcher Verbindungen, die bereits bei geringen Zuschlägen zu einer Epoxidharzmatrix zu einer deutlichen Zunahme der Zähigkeit der ausgehärteten Matrix führen können, sind dem Fachmann vertraut. Es können alle üblichen Schlagzähigkeitsmodifikatoren allein oder in Mischung eingesetzt werden. Beispiele für geignete Schlagzähigkeitsmodifikatoren sind z.B. in WO 2004/055092, WO 2005/007720 und WO 2011/107450 aufgeführt, womit hiermit Bezug genommen wird.

Vorzugsweise wird mindestens ein eingesetzter Schlagzähigkeitsmodifikator ausgewählt aus
a) einem Flüssigkautschuk, der einen Epoxidgruppen-terminierten Schlagzähigkeitsmodifikator enthält, erhältlich aus der Umsetzung von einem Isocyanat-terminierten Präpolymer mit einem Epoxidharz, das eine eine primäre oder sekundäre Hydroxygruppe enthaltende Epoxidverbindung umfasst,
b) einem Kern-Schale-Polymer, vorzugsweise aus einem Kern aus elastischem Acrylat- oder Butadien-Polymer und einer Schale aus einem starren thermoplastischen Polymer und/oder
c) einem Kern-Schale-Kautschuk.

Der als Schlagzähigkeitsmodifikator eingesetzte Flüssigkautschuk a) ist vorzugsweise erhältlich durch Umsetzung von einem Isocyanat-terminierten Präpolymer der Formel (IV) 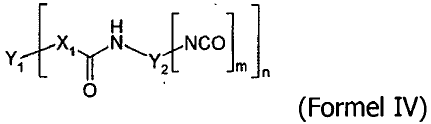
worin X₁ = O, S oder NH ist;
Y₁ für einen n-wertigen Rest eines reaktiven Polymers nach dem Entfernen endständiger Amino-, Thiol- oder Hydroxylgruppen steht;
Y₂ für einen divalenten Rest von aliphatischen, cycloaliphatischen, aromatischen oder araliphatischen Diisocyanaten nach Entfernen der Isocyanatgruppen steht, oder für einen trivalenten Rest von Trimeren oder Biureten von aliphatischen, cycloaliphatischen, aromatischen oder araliphatischen Diisocyanaten nach Entfernen der Isocyanatgruppen steht;
m = 1 oder 2 ist; und
n = 2, 3 oder 4; bevorzugt 2 oder 3, ist,
   mit mindestens einem Epoxidharz, umfassend eine eine primäre oder sekundäre Hydroxygruppe enthaltende Epoxidverbindung der Formel (V) 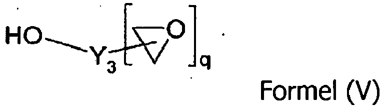 worin Y₃ für einen Rest eines eine primäre oder sekundäre Hydroxylgruppe enthaltenden aliphatischen, cycloaliphatischen, aromatischen oder araliphatischen Epoxids nach dem Entfernen der Epoxidgruppen und der primären oder sekundären Hydroxylgruppe steht; und
q = 1, 2 oder 3 ist;
in Anwesenheit mindestens einer Verbindung ausgewählt aus Anhydriden, Ketonen und Aldehyden als Glycolfänger, wobei das Isocyanat-terminierte Präpolymer der Formel (IV), das Epoxidharz und der Glycolfänger miteinander gemischt werden oder das Epoxidharz mit dem Glycolfänger umgesetzt wird, bevor sie mit dem Isocyanat-terminierten Präpolymer der Formel (IV) gemischt werden.

Das Isocyanat-terminierte Präpolymer ist vorzugsweise ein Umsetzungsprodukt von einem oder mehreren X₁H-Gruppen tragenden Verbindungen der Formel (VI) und einem oder mehreren Polyisocyanaten der Formel (VII), wobei die Substituenten und Indices in gleicher Weise wie in Formel (IV) definiert sind.

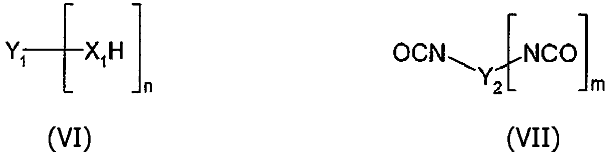

Als X₁H-Gruppen tragenden Verbindungen der Formel (VI) kommen alle üblichen auf dem Gebiet eingesetzten in Betracht. Beispiele für X₁H-Gruppen tragenden Verbindungen der Formel (VI) sind Polyetherpolyole, Polybutadienpolyole, Polyesterpolyole, Polycarbonatpolyole, NH-terminierte Polyether und Mischungen davon. Als Verbindungen der Formel (VI) sind insbesondere bevorzugt α,ω-Polyalkylenglykole mit C₂-C₆-Alkylengruppen oder mit gemischten C₂-C₆-Alkylengruppen, die mit Amino-, Thiol- oder Hydroxylgruppen, bevorzugt Hydroxylgruppen, terminiert sind. Besonders bevorzugt sind Polyetherpolyole wie Hydroxylgruppen-terminiertes Polyoxyethylen, Polyoxybutylene und Polyoxypropylen, sowie Mischungen dieser und Hydroxylgruppen-terminiertes Polybutadien und Amin-terminierter Polyether.

In einer bevorzugten Ausführungsform wird als Verbindung der Formel (VI) eine Mischung von mindestens zwei, bevorzugt zwei oder drei Verbindungen der Formel (VI) eingesetzt, nämlich mindestens einem Polyetherpolyol in Kombination mit mindestens einem OH-terminierten Kautschuk, wobei das Gewichtsverhältnis von Polyetherpolyol zu OH-terminiertem Kautschuk in einem Gewichtsverhältnis von 7:3 bis 2:8 liegt. Damit lassen sich die mechanischen Eigenschaften verbessern. Die nachstehend genannten Polyetherpolyole und OH-terminierten Kautschuke eignen sich nicht nur für in Kombination, sondern können gegebenenfalls auch allein eingesetzt werden.

Bevorzugte Polyetherpolyole sind Polymerisationsprodukte von Ethylenoxid, 1,2-Propylenoxid, 1,2- oder 2,3-Butylenoxid, Tetrahydrofuran oder Mischungen davon, besonders bevorzugt sind Polypropylenoxide und Polytetrahydrofurane. Solche Polyetherpolyole sind im Handel erhältlich. Im Handel erhältliche Polytetrahydrofurane sind z. B. die PolyTHF^{®-}Produkte von BASF wie PolyTHF^{®}2000, PolyTHF^{®}2500 CO oder PolyTHF^{®}3000 CO. Im Handel erhältliche Polypropylenoxide sind z.B. Caradol^{®}-Produkte von Shell, wie Caradol^{®}2000 oder Caradol^{®}ED56, oder Acclaim^{®}-Produkte von Bayer wie Acclaim^{®}-Polyol 2200, Acclaim^{®}-Polyol 12200 oder Acclaim^{®}-Polyol 4200. Weitere mögliche Polyetherpolyole sind Voranol^{®}1010L, Voranol^{®} EP1900 oder Voranol^{®}CP4755 von Dow.

Das mittlere Molekulargewicht der eingesetzten Polyetherpolyole kann variierten. Die Polyetherpolyole besitzen z.B. ein Gewichtsmittel des Molekulargewichts (Mw) im Bereich von 500 bis 5000 g/mol, bevorzugter 1000 bis 3000 g/mol und besonders bevorzugt im Bereich von 1.500 bis 2.500 g/mol, insbesondere etwa 2000 g/mol.

Sofern nicht anders angegeben wird in der vorliegenden Anmeldung das Gewichtsmittel des Molekulargewichts mittels GPC Methode bestimmt. Dazu werden je nach zu bestimmenden Polymer unterschiedliche Trennsäulen verwendet: Säulen: SDV 100, 1000, 10⁴ Å, (0,8 x 30 cm, 5 µm); Eluent: THF; Fluss: 1 mL/min; Temperatur: 35 °C; Kalibration relativ zu Poly(1,4-butadien)-Standards: 831 - 1.060.000 g/mol; Probenvorbereitung: Ca. 100 mg Probe wurde in 10 mL THF gelöst und mit einem 0,45 µm PTFE-Membranfilter filtriert.

Die OH-Funktionalität der eingesetzten Polyetherpolyole liegt bevorzugt im Bereich von etwa 2, z.B. Bereich von 1,9 bis 2,1. Gegebenenfalls kann eine Verbindung mit einer OH-Funktionalität von 3, wie z.B. butoxyliertes Trimethylolpropan (z.B. Simulsol^{®}TOMB), zu dem Polyetherpolyol zugemischt werden, um die OH-Funktionalität zu erhöhen.

Die OH-Funktionalität kann z.B. gemessen werden mittels Titration. Die Hydroxylgruppen enthaltende Substanz wird mit einem Überschuss an Diisocyanat umgesetzt und nach der Reaktion wird der Isocyanatüberschuss mit Hilfe von 0,1 M HCl Lösung titrimetrisch bestimmt und die Hydroxylzahl berechnet.

Es können ein oder mehrere OH-terminierte Kautschuke eingesetzt werden, wobei der Einsatz von zwei OH-terminierten Kautschuken, insbesondere zwei OH-terminierten Polybutadienen, zu besonders günstigen Eigenschaften führen. Unter OH-terminierten Kautschuken werden hier z.B. und bevorzugt Hydroxyl-terminierte Polybutadiene und auf Rizinusöl basierte Polyole verstanden, wobei Hydroxyl-terminierte Polybutadiene besonders bevorzugt sind. Rizinusöl ist ein Triglycerid, dessen OH-Funktionalität auf der Hydroxygruppe der Rizinusölsäure beruht, und daher ein Polyol darstellt. Rizinusöl ist ein Naturprodukt, das in verschiedenen Qualitäten erhältlich ist, z.B. in Standardqualität, als entwässertes Produkt oder mit sehr niedriger Säurezahl. Es sind auch derivatisierte Rizinusölprodukte erhältlich, z.B. oxidativ polymerisiertes Rizinusöl oder teilweise dehydratisiertes Rizinusöl, wodurch z.B. eine niedrigere OH-Funktionalität eingestellt werden kann. Auf Rizinusöl basierte Polyole umfassen Rizinusöl in den verschiedenen Qualitäten und Rizinusölderivate.

Im Handel erhältliche Hydroxyl-terminierte Polybutadiene sind z.B. die Poly bd^{®}- und Krasol^{®}-Produkte von Cray Valley wie Krasol^{®} LBH-P 2000 oder Poly bd^{®} R45V. Rizinusöl-basierte Polyole sind z.B. die Albodur^{®}-Produkte von Alberdingk Böley, wie Albodur^{®}901, oder die Polycine^{®}-Produkte von Baker Castor Oil Company, wie Polycine^{®}-GR80.

Die eingesetzten Hydroxyl-terminierten Kautschuke weisen bevorzugt ein Gewichtsmittel des Molekulargewichts (Mw) von weniger als 15.000 g/mol und bevorzugt weniger als 4.000 g/mol auf.

Die OH-Funktionalität der eingesetzten Hydroxyl-terminierten Kautschuke liegt bevorzugt im Bereich von 1,7 bis 2,2 für anionisch hergestellte Typen oder von 2,2 bis 2,8 für radikalisch hergestellte Typen. Es ist bevorzugt, dass der Hydroxyl-terminierter Kautschuk, insbesondere ein Hydroxyl-terminiertes Butadien, mit einer OH-Funktionalität von kleiner gleich 2 verwendet wird.

Wenn eine Mischung von Polyetherpolyol zu Hydroxyl-terminiertem Kautschuk verwendet wird, ist das Gewichtsverhältnis von Polyetherpolyol zu Hydroxyl-terminiertem Kautschuk bevorzugt im Bereich von 7:3 bis 2:8, bevorzugter 7:3 bis 4:6 und besonders bevorzugt 7:3 bis 5:5. Auf diese Weise können die mechanischen Eigenschaften des gehärteten Klebstoffs verbessert werden, insbesondere der Schlagschälwiderstand bei -30°C.

Geeignete Polyisocyanate der Formel (VII) sind Diisocyanate oder Triisocyanate. Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendüsocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylendiisocyanat (TMXDI) usw. sowie deren Dimere. Bevorzugt sind HDI, IPDI, MDI oder TDI.

Das Epoxidharz, umfassend eine eine primäre oder sekundäre Hydroxygruppe enthaltende Epoxidverbindung der Formel (V), zur Umsetzung mit dem Isocyanat-terminierten Präpolymer kann ein Epoxidharz oder eine Mischung aus zwei oder mehr Epoxidharzen sein. Das Epoxidharz ist bevorzugt ein flüssiges Epoxidharz. Es kann sich bei dem Epoxidharz bzw. Epoxid-Flüssigharz um ein im Handel erhältliches Epoxidharz-Produkt handeln. Es können insbesondere die Epoxidharze verwendet werden, die vorstehend bereits als Epoxidharze für den Einsatz in der Komponente A beschrieben wurde, sofern diese eine Epoxidverbindung der Formel (V) beinhalten. Dies ist aber in der Regel der Fall. Es wird daher auf die oben genannten Beispiele für Epoxidharze verwiesen.

Epoxidharze werden nämlich gewöhnlich aus der Umsetzung einer Epoxidverbindung wie z.B. Epichlorhydrin mit einem mehrfunktionellen Alkohol, d.h. einem Diol, Triol oder Polyol, erhalten. Je nach Reaktionsführung entstehen bei der Umsetzung von mehrfunktionellen Alkoholen mit einer Epoxidverbindung wie z.B. Epichlorhydrin als Nebenprodukte auch die entsprechenden Hydroxy-Epoxidverbindungen in unterschiedlichen Konzentrationen. In der Regel handelt es sich bei den Epoxidharzen um das bei der Glycidylisierungsreaktion von Polyolen erhaltene Produktgemisch aus vollständig und partiell zum Glycidylether reagiertem Polyol. Beispiele solcher hydroxylhaltigen Epoxide in Epoxidharzen sind Trimethylolpropandiglycidylether als Gemisch enthalten in Trimethylolpropantriglycidylether, Glycerindiglycidylether als Gemisch enthalten in Glycerintriglycidylether, Pentaerythrittriglycidylether als Gemisch enthalten in Pentaerythrittetraglycidylether.

Besonders bevorzugt sind die bereits vorstehend beschriebenen Epoxidharze auf Basis von Diglycidylether von Bisphenol A (BADGE), Bisphenol F oder Bisphenol A/F gemäß den Formeln (II) oder (III).

Die Umsetzung des Isocyanat-Präpolymers der Formel (IV) und des Epoxidharzes, umfassend eine eine primäre oder sekundäre Hydroxygruppe enthaltende Epoxidverbindung der Formel (V) wird bevorzugt in Anwesenheit von mindestens einem Anhydrid, Keton oder Aldehyd als Glycolfänger durchgeführt, wobei Anhydride bevorzugt sind. Bevorzugte Anhydride sind Bernsteinsäureanhydrid, Phthalsäureanhydrid und Derivate davon, insbesondere Methylphthalsäureanhydrid. Das Anhydrid umfasst bevorzugt den Bernsteinsäureanhydridring oder Maleinsäureanhydridring als Strukturelement. Beispiele für Ketone und Aldehyde sind Formaldehyd, Aceton, Cyclopentanon und Benzaldehyd.

In einer Ausführungsform ist dieser zusätzliche Schlagzähigkeitsmodifikator (SM) ein Flüssigkautschuk (SM1), welcher ein carboxyl- oder epoxidterminiertes Acrylnitril/ Butadien-Copolymer oder ein Derivat davon ist. Derartige Flüssigkautschuke sind beispielsweise unter dem Namen Hypro^{®} (früher Hycar^{®}) CTBN und CTBNX und ETBN von Emerald Performance Materials LLC kommerziell erhältlich. Als Derivate sind insbesondere Epoxidgruppen aufweisende Elastomer-modifizierte Präpolymere, wie sie unter der Produktlinie Polydis^{®}, vorzugsweise aus der Produktlinie Polydis^{®} 36.., von der Firma Struktol^{®} (Schill + Seilacher Gruppe, Deutschland) oder unter der Produktlinie Albipox® (Evonik Hanse GmbH, Deutschland) kommerziell vertrieben werden, geeignet. In einer weiteren Ausführungsform ist der Schlagzähigkeitsmodifikator (SM) ein Polyacrylatflüssigkautschuk (SM1), der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Ein weiteres Beispiel für einen bevorzugt eingesetzten Schlagzähigkeitsmodifikator sind ein oder mehrere Kern-Schale-Polymere, insbesondere Kern-Schale-Polymerteilchen. Kern-Schale-Polymere bestehen aus einem elastischen Kernpolymer und einem starren Schalen-Polymer. Insbesondere geeignete Kern-Schale-Polymere bestehen aus einem Kern aus elastischem Acrylat- oder Butadien-Polymer, den eine Schale eines starren thermoplastischen Polymers umhüllt. Diese Kern-Schale-Struktur bildet sich entweder spontan durch Entmischen, bzw. Selbstorganisation, eines Blockcopolymers oder ist durch die Polymerisationsführung als Latex oder Suspensionspolymerisation mit nachfolgender Pfropfung vorgegeben.

Bevorzugte Kern-Schale-Polymere sind sogenannte MBS Polymere, welche kommerziell unter den Handelsnamen Clearstrength^{®} von Atofina, Paraloid^{®} von Rohm und Haas oder F-351^{®} von Zeon erhältlich sind. Besonders bevorzugt sind Kern-Schale-Polymerpartikel, die bereits als getrockneter Polymerlatex vorliegen. Beispiele hierfür sind GENIOPERL^{®}M23A von Wacker mit Polysiloxankern und Acrylatschale, strahlungsvernetzte Kautschukpartikel der NEP Reihe, hergestellt von Eliokern oder Nanoprene^{®} von Lanxess oder Paraloid^{®} EXL von Rohm und Haas. Weitere vergleichbare Beispiele für Kern-Schale-Polymere werden unter dem Namen Albidur^{®} von Nanoresins AG, Deutschland, angeboten.

Ein weiteres Beispiel für einen bevorzugt eingesetzten Schlagzähigkeitsmodifikator sind ein oder mehrere Kern-Schale-Kautschuke, insbesondere Kern-Schale-Kautschukteilchen. Diese werden z.B. in der EP 1 632 533 A1 beschrieben. Die KernSchale-Kautschukteilchen beinhalten einen vernetzten Kautschuk-Kern, in den meisten Fällen ein vernetztes Copolymer von Butadien, und eine Hülle, die vorzugsweise ein Copolymer aus Styrol, Methylmethacrylat, Glycidylmethacrylat und gegebenenfalls Acrylnitril ist. Der Kern-Schale-Kautschuk ist bevorzugt in einem Polymer oder einem Epoxyharz dispergiert.

Bevorzugte Kern-Schale-Kautschuke umfassen die von Kaneka Corporation unter der Bezeichnung Kaneka Kane Ace vertriebenen Produkte, z.B. Kaneka Kane-Ace^{®}MX 156 und Kaneka Kane Ace^{®}MX 120 Kern-Schale-Kautschuk-Dispersionen. Die Produkte enthalten die Kern-Schale-Kautschukteilchen in einem Epoxidharz vordispergiert, gewöhnlich in einer Konzentration von etwa 25%. Wenn Dispersionen wie diese verwendet werden, bildet das Epoxidharz, das in diesen Produkten enthaltenen ist, alles oder einen Teil der Epoxidharzkömponente des Klebstoffs der Erfindung.

Gegebenenfalls können ein oder mehrere Füllstoffe eingesetzt werden. Als Füllstoffe für die Komponente A oder die Härterkomponente können alle üblichen, auf diesem Gebiet eingesetzten verwendet werden. Beispiele sind Glimmer, Talk, Kaolin, Wöllastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint.

Gegebenenfalls können ein oder mehrere Thixotropieadditive bzw. Rheologie-Modifizierer eingesetzt werden. Als Thixotropieadditive für die Komponente A oder die Härterkomponente können alle üblichen, auf diesem Gebiet eingesetzten verwendet werden. Beispiele sind z.B. Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene. Gegebenenfalls können ein oder mehrere Haftvermittler eingesetzt werden. Als Haftvermittler für die Komponente A oder die Härterkomponente können alle üblichen, auf diesem Gebiet eingesetzten verwendet werden. Beispiele sind Organoalkoxysilane wie 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)-propyl]ethylendiamin, 3-Ureidopropyltrimethoxysilan, 3-Chloropropyltrimethoxysilan, Vinyltrimethoxysilan, oder die entsprechenden Organosilane mit Ethoxygruppen oder (Poly)etheroxygruppen anstelle der Methoxygruppen.

Gegebenenfalls können auch weitere Additive als Zusatzstoffe in der Komponente A oder der Komponente B enthalten sein. Diese werden bezüglich der oben angegebenen Gewichtsverhältnisse zu den weiteren Additiven gezählt. Beispiele sind
- Lösemittel, Filmbildehilfsmittel oder Extender, wie Toluol, Xylol, Methylethylketon, 2-Ethoxyethanol, 2-Ethoxyethylacetat, Benzylalkohol, Ethylenglykol, Diethylenglykolbutylether, Dipropylenglykolbutylether, Ethylenglykolbutylether, Ethylenglykolphenylether, N-Methylpyrrolidon, Propylenglykolbutylether, Propylenglykolphenylether, Diphenylmethan, Diisopropylnaphthalin, Erdölfraktionen wie zum Beispiel Solvesso-Typen (von Exxon), aromatische Kohlenwasserstoffharze, insbesondere Phenolgruppen-haltige Typen, Sebacate, Phthalate, organische Phosphor- und Sulfonsäureester und Sulfonamide; und
- Reaktiwerdünner, z.B. Epoxid-Reaktiwerdünner, epoxidiertes Sojaöl oder Leinöl, Acetoacetatgruppen aufweisende Verbindungen, insbesondere acetoacetylierte Polyole, Butyrolacton, sowie weiterhin Isocyanate und Reaktivgruppen-aufweisende Silikone,
- Stabilisatoren gegen Oxidation, Wärme, Licht und UV-Strahlung,
- flammhemmende Substanzen,
- oberflächenaktive Substanzen wie beispielsweise Netzmittel, Verlaufsmittel, Entlüftungsmittel oder Entschäumer, und
- Biozide wie beispielsweise Algizide, Fungizide oder das Pilzwachstum hemmende Substanzen.

Die Komponente B wird vorteilhaft als Härterkomponente in einem zweikomponentigen Epoxyklebstoff verwendet. Der zweikomponentige Epoxyklebstoff kann zur Verklebung von Substraten verwendet werden. Hierfür werden die Komponente A und die Härterkomponente B in üblicher Weise vermischt und dann auf eines oder beide der zu verklebenden Substrate appliziert.

Danach werden die zu verklebenden Teile gefügt, worauf der Klebstoff aushärtet. Hierbei ist darauf zu achten, dass das Fügen der Teile innerhalb der so genannten Offenzeit erfolgt, um zu gewährleisten, dass beide Fügeteile verlässlich miteinander verklebt werden. Die Aushärtung der Epoxidharzzusammensetzung kann bei den üblichen Temperaturen erfolgen, z.B. bei einer Temperatur von 100 °C oder weniger, bevorzugt von 60 - 85°C.

Die zu verklebenden Substrate können gleich oder verschieden sein. Geeignete Substrate sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze, Glasfaserverstärkter Kunststoff (GFK), Kohlenfaserverstärkter Kunststoff (CFK); beschichtete Substrate wie pulverbeschichtete Metalle oder Legierungen; sowie Farben und Lacke, insbesondere Automobildecklacke. Besonders bevorzugt dient der zweikomponentige Epoxyklebstoff zur Verklebung von Metall-, Kunststoff- oder Faserverbundwerkstoffoberflächen.

Der zweikomponentige Epoxyklebstoff eignet sich insbesondere zur Reparatur oder Verklebung von Fahrzeugteilen, insbesondere Automobilteilen, Metallbauteilen, Kunststoffen oder Windmühlenflügeln.

Beispiele für Fahrzeuge sind Automobile, Lastkraftwagen, Busse, Schienenfahrzeuge, Flugzeuge und Schiffe. Verklebungen im Fahrzeugbau sind beispielsweise das Ankleben von Teilen, wie Kunststoffabdeckungen, Zierleisten, Flansche, Stosstangen, Führerkabinen oder andere Anbauteile, an die lackierte Karosserie eines Fahrzeugs, oder das Einkleben von Scheiben in die Karosserie. In einer bevorzugten Ausführungsform wird der zweikomponentige Epoxyklebstoff als zweikomponentiger Reparaturklebstoff im Fahrzeugbau, insbesondere für Automobile, verwendet.

### Beispiele

Im Folgenden werden Beispiele aufgeführt, welche die Erfindung weiter veranschaulichen, den Umfang der Erfindung aber in keiner Weise beschränkten sollen. Sofern nicht anders angegeben, beziehen sich alle Anteile und Prozentsätze auf das Gewicht.

| Verwendete Rohstoffe | Beschreibung | |
|---|---|---|
| Epikote^{®} 828LVEL | Standard Bisphenol-A-Epoxidharz | Hexion |
| HDK 18 | pyrogene Kieselsäure | Wacker |
| Toughener | reaktiver Flüssigkautschuk, enthaltend Epoxidgruppen-terminierten Schlagzähigkeitsmodifikator aus einem Isocyanat-terminierten Präpolymer und einem Epoxidharz | Sika |
| Ancamine^{®}1922A | 4,7,10-Trioxatridecan-1,13-di-amin | Air Products |
| Jeffamine^{®}RFD-270 | Amin-terminiertes cycloaliphatisches Propoxylat | Huntsman |
| Aradur^{®}3460 | Phenalkamin | Huntsman |
| A-187 | Epoxysilan | Crompton |
| ATBN^{®} 1300x16 | Amin-terminierter Kautschuk | Emerald Performance Materials |
| Jeffamine^{®}THF-170 | Amin-terminiertes Poly(tetra-methylenetherglycol) | Huntsman |
| Jeffamine^{®}THF-100 | Amin-terminiertes Poly(tetramethylenetherglycol)-Poly(propylenglycol)-Copolymer | Huntsman |
| Accelerator^{®}2950 | Beschleuniger | Huntsman |

Die Komponenten wurden in den Mengen, die in den nachstehenden Tabellen aufgeführt sind, in üblicher Weise miteinander vermischt, um die Komponente A und die Härterkomponente B zu erhalten. Zur Prüfung der Eigenschaften wurden die beiden Komponenten in einem 1:1 Äquivalentverhältnis von NH-Äquivalentmasse zur Epoxidäquivalentmasse gemischt und gehärtet. Die hergestellten Epoxyklebstoffe wurden nach folgenden Tests bewertet. Die Ergebnisse sind ebenfalls in den nachstehenden Tabellen aufgeführt.

### Zugscherfestigkeit (ZSF) (DIN EN 1465)

Die Probekörper wurden aus den beschriebenen Zusammensetzungen und mit elektrolytisch verzinktem H420 Stahl (eloZn) mit dem Maß 100 x 25 x 1,5 mm hergestellt, dabei betrug die Klebfläche 25 x 10mm bei einer Schichtdicke von 0,3 mm. Gehärtet wurde 4h RT + 30min 85°C. Die Zuggeschwindigkeit betrug 10mm/min.

### Schlagschälwiderstand (I-Peel) (ISO 11343)

Die Probekörper wurden aus den beschriebenen Zusammensetzungen und mit elektrolytisch verzinktem DC04 Stahl (eloZn) mit dem Maß 90 x 20 x 0,8 mm hergestellt, dabei betrug die Klebfläche 20 x 30 mm bei einer Schichtdicke von 0,3mm. Gehärtet wurde entweder 7d bei RT oder 4h RT + 30min 85°C. Die Messung der Schlagschälwiderstand erfolgte jeweils bei Raumtemperatur und bei minus 30°C. Die Schlaggeschwindigkeit betrug 2 m/s. Als Schlagschälwiderstand in N/mm wird die Fläche unter der Messkurve (von 25% bis 90%, gemäss ISO 11343) angegeben.

### E-Modul (DIN EN ISO 527)

Eine Probe der Zusammensetzung wurde zwischen zwei Teflonpapieren auf eine Schichtdicke von 2 mm verpresst. Anschließend wurde die Zusammensetzung während 4h RT + 30min 85°C gehärtet. Die Teflonpapiere wurden entfernt und die Probekörper nach DIN-Norm wurden im heißen Zustand ausgestanzt. Die Prüfkörper wurden nach 1 Tag Lagerung unter Normklima mit einer Zuggeschwindigkeit von 2 mm/min gemessen. Das E-Modul wurde gemäss DIN EN ISO 527 bestimmt.

**A-Komponente A1**

| Rohstoff | A1 |
|---|---|
| A Toughener | 30 |
| B Epoxidharz Epikote^{®}828 LVEL | 65 |
| C Füllstoff HDK 18 | 5 |

**B-Komponenten B1 bis B6**

| Rohstoff | B1 | B2 | B3 | B4 | B5 | B6 |
|---|---|---|---|---|---|---|
| B1 Amin Ancamine^{®}R1922 | 63 | 47,5 | 32 | 63 | 47,5 | 32 |
| B2 Amin Jeffamine^{®}RFD-270 | 32 | 47,5 | 63 | | | |
| B2 Amin Aradur^{®}3460 | | | | 32 | 47,5 | 63 |
| C Füllstoff HDK 18 | 5 | 5 | 5 | 5 | 5 | 5 |

**Resultate**

| Prüfung | A1+B1 | A1+B2 | A1+B3 | A1+B4 | A1+B5 | A1+B6 |
|---|---|---|---|---|---|---|
| E-Modul¹ | 1130 | 1050 | 1030 | 930 | 1070 | 990 |
| ZSF¹ | 24 | 21 | 24 | 21 | 21 | 22 |
| I-Peel¹ bei 23°C | 18 | 24 | 30 | 11 | 9 | 5 |
| I-Peel¹ -30°C | 26 | 24 | 24 | 13 | 2 | 1 |
| I-Peel² bei 23°C | 26 | 28 | 33 | 18 | 9 | 11 |

| | | | | | | |
|---|---|---|---|---|---|---|
| ¹ Härtung 4h RT + 30min 85°C ² Härtung 7d RT | | | | | | |

**A-Komponente A2**

| Rohstoff | A2 |
|---|---|
| A Toughener | 23 |
| B Epoxidharz Epikote^{®}R828 LVEL | 70 |
| C Füllstoff HDK 18 | 5 |
| D Additive A-187 | 2 |

**B-Komponenten B7 bis B9**

| Rohstoff | B7 | B8 | B9 |
|---|---|---|---|
| B1 Amin Ancamine^{®}1922 | 12 | 12 | 12 |
| B2 Amin Jeffamine^{®}RFD-270 | 22 | 22 | 22 |
| B3 Amin ATBN^{®}1300x16 | 15 | | |
| B3 Amin Jeffamine^{®}THF-100 | | 15 | |
| B3 Amin Jeffamine^{®}THF-170 | | | 15 |
| D Accelerator^{®}2950 | 5 | 5 | 5 |
| E Füllstoff HDK 18 | 46 | 46 | 46 |

**Resultate**

| Prüfung | A2+B7 | A2+B8 | A2+B9 |
|---|---|---|---|
| E-Modul¹ | 1100 | 1000 | 1200 |
| ZSF¹ | 32 | 30 | 30 |
| I-Peel¹ bei 23°C | 31 | 34 | 29 |
| I-Peel¹ -30°C | 17 | 7 | 15 |
| I-Peel² bei 23°C | 39 | 39 | 37 |

| | | | |
|---|---|---|---|
| ¹ Härtung 4h RT + 30min 85°C ² Härtung 7d RT | | | |

## Patentansprüche

1. Härterkomponente für einen zweikomponentigen Epoxyklebstoff aus einer Komponente A umfassend ein Epoxidharz und einer Härterkomponente B, wobei die Härterkomponente
B1) mindestens ein aliphatisches acyclisches Polyetheramin mit mindestens 2 Aminogruppen und
B2) mindestens ein Polyamin ausgewählt aus einem Phenalkamin oder einem aliphatischen Polyetheramin, das mindestens ein acyclisches Alkoxylatsegment und mindestens ein cycloaliphatisches Segment enthält,
sowie gegebenenfalls
B3) mindestens eine Aminverbindung ausgewählt aus einem Amin-terminierten Kautschuk, einem Amin-terminierten Poly(tetramethylenether-glycol) und einem Amin-terminierten Poly(tetramethylenetherglycol)-Poly(propylenglycol)-Copolymer
umfasst.

2. Härterkomponente nach Anspruch 1, **dadurch gekennzeichnet, dass** das aliphatische acyclische Polyetheramin ausgewählt ist aus 4,7-Dioxaoctan-1,10-diamin, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höheren Oligomeren dieser Diamine.

3. Härterkomponente nach Anspruch 1 oder Anspruch 2, **dadurch gekennzeichnet, dass** das mindestens eine acyclische Alkoxylatsegment eine oder mehrere Ethoxylatgruppen, eine oder mehrere Propoxylatgruppen oder eine Mischung von Ethoxylat- und Propoxylatgruppen ist, wobei Propoxylat bevorzugt ist.

4. Härterkomponente nach irgendeinem der Ansprüche 1 bis 3, **dadurch gekennzeichnet, dass** das Gewichtsverhältnis der Aminkomponente B1 zur Aminkomponente B2 in der Härterkomponente B im Bereich von 2:1 bis 1:3, bevorzugt von 2:1 bis 1:2 liegt.

5. Härterkomponente nach irgendeinem der Ansprüche 1 bis 4, **dadurch gekennzeichnet, dass** in der Härterkomponente eine oder mehrere der Aminkomponenten B1), B2) und gegebenenfalls B3) in Form eines Addukts mit einem Epoxidharz vorliegen.

6. Härterkomponente nach irgendeinem der Ansprüche 1 bis 5, **dadurch gekennzeichnet, dass** in der Härterkomponente B
10 bis 20 Gew.-% aliphatisches acyclisches Polyetheramin B1),
15 bis 40 Gew.-% Polyamin B2),
0 bis 20 Gew.-% Aminverbindung B3), bevorzugt 5 bis 20 Gew.-%,
0 bis 50 Gew.-% Füllstoffe und/oder Thixotropieadditive, bevorzugt 5 bis 50 Gew.-%,
0 bis 5 Gew.-% Haftvermittler und/oder weitere Additive und
0 bis 5 Gew.-% Beschleuniger, bevorzugt 2 bis 5 Gew.-%,
enthalten sind.

7. Härterkomponente nach irgendeinem der Ansprüche 1 bis 6, **dadurch gekennzeichnet, dass** das mindestens eine cycloaliphatische Segment eine cycloaliphatische Gruppe in der Hauptkette des aliphatischen Polyetheramins B2) ist.

8. Härterkomponente nach irgendeinem der Ansprüche 1 bis 7, **dadurch gekennzeichnet, dass** das aliphatische Polyetheramin (Komponente B2) ein Amin-terminiertes cycloaliphatisches Ethoxylat oder ein Amin-terminiertes cycloaliphatisches Propoxylat ist.

9. Zweikomponentiger Epoxyklebstoff aus einer Komponente A umfassend ein Epoxidharz und einer Härterkomponente B, wobei die Härterkomponente eine Härterkomponente nach irgendeinem der Ansprüche 1 bis 8 ist.

10. Zweikomponentiger Epoxyklebstoff nach Anspruch 9, **dadurch gekennzeichnet, dass** Komponente A ferner mindestens einen Schlagzähigkeitsmodifikator umfasst.

11. Zweikomponentiger Epoxyklebstoff nach irgendeinem der Ansprüche 9 bis 10, **dadurch gekennzeichnet, dass** in der Komponente A
40 bis 80 Gew.-% mindestens eines Epoxidharzes,
10 bis 40 Gew.-% mindestens eines Schlagzähigkeitsmodifikators,
0 bis 50 Gew.-% Füllstoffe und/oder Thixotropieadditive, bevorzugt 5 bis 50 Gew.-%, und
0 bis 5 Gew.-% Haftvermittler und/oder weitere Additive
enthalten sind.

12. Zweikomponentiger Epoxyklebstoff nach irgendeinem der Ansprüche 9 bis 11, **dadurch gekennzeichnet, dass** das Epoxidharz einen Bisphenol A-diglycidylether, einen Bisphenol F-diglycidylether, einen Bisphenol A/F-digylcidylether, ein Novolak-Epoxidharz oder Mischungen davon umfasst.

13. Zweikomponentiger Epoxyklebstoff nach irgendeinem der Ansprüche 10 bis 12, **dadurch gekennzeichnet, dass** mindestens ein Schlagzähigkeitsmodifikator ausgewählt ist aus
a) einem Flüssigkautschuk, der einen Epoxidgruppen-terminierten Schlagzähigkeitsmodifikator enthält, erhältlich aus der Umsetzung von einem Isocyanat-terminierten Präpolymer mit einem Epoxidharz, das eine primäre oder sekundäre Hydroxygruppe enthaltende Epoxidverbindung umfasst,
b) einem Kern-Schale-Polymer, vorzugsweise aus einem Kern aus elastischem Acrylat- oder Butadien-Polymer und einer Schale aus einem starren thermoplastischen Polymer und/oder
c) einem Kern-Schale-Kautschuk.

14. Verwendung einer Komponente B als Härterkomponente in einem zweikomponentigen Epoxyklebstoff, wobei die Komponente B
B1) mindestens ein aliphatisches acyclisches Polyetheramin mit mindestens 2 Aminogruppen und
B2) mindestens ein Polyamin ausgewählt aus einem Phenalkamin oder einem aliphatischen Polyetheramin, das mindestens ein acyclisches Alkoxylatsegment und mindestens ein cycloaliphatisches Segment enthält,
sowie gegebenenfalls
B3) mindestens eine Aminverbindung ausgewählt aus einem Amin-terminierten Kautschuk, einem Amin-terminierten Poly(tetramethylenether-glycol) und einem Amin-terminierten Poly(tetramethylenetherglycol)-Poly(propylenglycol)-Copolymer
umfasst.

15. Verwendung einer Komponente B als Härterkomponente in einem zweikomponentigen Epoxyklebstoff nach Anspruch 14, **dadurch gekennzeichnet, dass** die Härterkomponente nach irgendeinem der Ansprüche 2 bis 8 definiert ist.

## Claims

1. A curing agent component for a two-component epoxy adhesive made of a component A comprising an epoxy resin and a curing agent component B, wherein the curing agent component comprises
B1) at least one aliphatic acyclic polyether amine with at least 2 amino groups and
B2) at least one polyamine selected from a phenalkamine or an aliphatic polyether amine containing at least one acyclic alkoxylate segment and at least one cycloaliphatic segment,
and optionally
B3) at least one amine compound selected from an amine-terminated rubber, an amine-terminated poly(tetramethylene ether glycol) and an amine-terminated poly(tetramethylene ether glycol)-poly(propylene glycol) copolymer.

2. The curing agent component according to claim 1, **characterized in that** the aliphatic acyclic polyether amine is selected from 4,7-dioxaoctane-1,10-diamine, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatri-decane-1,13-diamine and higher oligomers of these diamines.

3. The curing agent component according to claim 1 or claim 2, **characterized in that** the at least one acyclic alkoxylate segment is one or more ethoxylate groups, one or more propoxylate groups or a mixture of ethoxylate and propoxylate groups, wherein propoxylate is preferred.

4. The curing agent component according to any of claims 1 to 3, **characterized in that** the weight ratio of the amine component B1 to the amine component B2 in the curing agent component B is in the range of 2:1 to 1:3, preferably 2:1 to 1:2.

5. The curing agent component according to any of claims 1 to 4, **characterized in that** in the curing agent component one or more of the amine components B1), B2) and optionally B3) are present in the form of an adduct with an epoxy resin.

6. The curing agent component according to any of claims 1 to 5, **characterized in that** the curing agent component B contains
10 to 20 wt.% aliphatic acyclic polyether amine B1),
15 to 40 wt.% polyamine B2),
0 to 20 wt.% amine compound B3), preferably
5 to 20 wt.%,
0 to 50 wt.% fillers and/or thixotropic additives, preferably 5 to 50 wt.%,
0 to 5 wt.% adhesive promoters and/or additional additives and
0 to 5 wt.% accelerators, preferably 2 to 5 wt.%.

7. The curing agent component according to any of claims 1 to 6, **characterized in that** the at least one cycloaliphatic segment is a cycloaliphatic group in the main chain of the aliphatic polyether amine B2).

8. The curing agent component according to any of claims 1 to 7, **characterized in that** the aliphatic polyether amine (component B2) is an amine-terminated cycloaliphatic ethoxylate or an amine-terminated cycloaliphatic propoxylate.

9. A two-component epoxy adhesive made of a component A comprising an epoxy resin and a curing agent component B, wherein the curing agent component is a curing agent component according to any of claims 1 to 8.

10. The two-component epoxy adhesive according to claim 9, **characterized in that** component A also comprises at least one impact strength modifier.

11. The two-component epoxy adhesive according to either of claims 9 and 10, **characterized in that** in the component A
40 to 80 wt.% at least one epoxy resin,
10 to 40 wt.% at least one impact strength modifier,
0 to 50 wt.% fillers and/or thixotropic additives, preferably 5 to 50 wt.%, and
0 to 5 wt.% adhesive promoters and/or additional additives
are present.

12. The two-component epoxy adhesive according to any of claims 9 to 11, **characterized in that** the epoxy resin comprises a bisphenol A diglycidyl ether, a bisphenol F diglycidyl ether, a bisphenol A/F diglycidyl ether, a novolac epoxy resin or mixtures thereof.

13. The two-component epoxy adhesive according to any of claims 10 to 12, **characterized in that** at least one impact strength modifier is selected from
a) a liquid rubber containing an epoxy group-terminated impact strength modifier that can be obtained from the reaction of an isocyanate-terminated prepolymer with an epoxy resin that comprises a primary or secondary hydroxy group containing epoxy compound,
b) a core-shell polymer, particularly made from a core of elastic acrylate or butadiene polymer and a shell of a rigid thermoplastic polymer and/or
c) a core-shell rubber.

14. Use of a component B as curing agent component in a two-component epoxy adhesive, wherein component B comprises
B1) at least one aliphatic acyclic polyether amine with at least 2 amino groups and
B2) at least one polyamine selected from a phenalkamine or an aliphatic polyether amine containing at least one acyclic alkoxylate segment and at least one cycloaliphatic segment,
and optionally
B3) at least one amine compound selected from an amine-terminated rubber, an amine-terminated poly(tetramethylene ether glycol) and an amine-terminated poly(tetramethylene ether glycol)-poly(propylene glycol) copolymer.

15. Use of a component B as curing agent component in a two-component epoxy adhesive according to claim 14, **characterized in that** the curing agent component is defined according to any of claims 2 to 8.

## Revendications

1. Composant durcisseur pour adhésif époxy bicomposant constitué par un composant A comprenant une résine époxy et un composant durcisseur B, le composant durcisseur comprenant
B1) au moins un polyéther-amine acyclique aliphatique contenant au moins 2 groupes amino, et
B2) au moins une polyamine choisie parmi une phénalkamine ou une polyéther-amine aliphatique, qui contient au moins un segment alcoxylate acyclique et au moins un segment cycloaliphatique,
ainsi qu'éventuellement
B3) au moins un composé d'amine choisi parmi un caoutchouc à terminaison amine, un poly(tétraméthylène-éther glycol) à terminaison amine et un copolymère de poly(tétraméthylène-éther glycol)-poly(propylène glycol) à terminaison amine.

2. Composant durcisseur selon la revendication 1, **caractérisé en ce que** la polyéther-amine acyclique aliphatique est choisie parmi la 4,7-dioxaoctane-1,10-diamine, la 3,6-dioxaoctane-1,8-diamine, la 4,7-dioxadécane-1,10-diamine, la 4,7-dioxadécane-2,9-diamine, la 4,9-dioxadodécane-1,12-diamine, la 5,8-dioxadodécane-3,10-diamine, la 4,7,10-trioxatridécane-1,13-diamine et les oligomères supérieurs de ces diamines.

3. Composant durcisseur selon la revendication 1 ou la revendication 2, **caractérisé en ce que** ledit au moins un segment alcoxylate acyclique est un ou plusieurs groupes éthoxylate, un ou plusieurs groupes propoxylate ou un mélange de groupes éthoxylate et propoxylate, les groupes propoxylate étant préférés.

4. Composant durcisseur selon l'une quelconque des revendications 1 à 3, **caractérisé en ce que** le rapport en poids entre le composant amine B1 et le composant amine B2 dans le composant durcisseur B se situe dans la plage allant de 2:1 à 1:3, de préférence de 2:1 à 1:2.

5. Composant durcisseur selon l'une quelconque des revendications 1 à 4, **caractérisé en ce qu'**un ou plusieurs des composants amines B1), B2) et éventuellement B3) se présentent dans le composant durcisseur sous la forme d'un adduit avec une résine époxyde.

6. Composant durcisseur selon l'une quelconque des revendications 1 à 5, **caractérisé en ce que** le composant durcisseur B contient
10 à 20 % en poids de polyéther-amine acyclique aliphatique B1),
15 à 40 % en poids de polyamine B2),
0 à 20 % en poids de composé d'amine B3), de préférence 5 à 20 % en poids,
0 à 50 % en poids de charges et/ou d'additifs thixotropiques, de préférence 5 à 50 % en poids,
0 à 5 % en poids de promoteurs d'adhésion et/ou d'autres additifs, et
0 à 5 % en poids d'accélérateurs, de préférence
2 à 5 % en poids.

7. Composant durcisseur selon l'une quelconque des revendications 1 à 6, **caractérisé en ce que** ledit au moins un segment cycloaliphatique est un groupe cycloaliphatique dans la chaîne principale de la polyéther-amine aliphatique B2).

8. Composant durcisseur selon l'une quelconque des revendications 1 à 7, **caractérisé en ce que** la polyéther-amine aliphatique (composant B2) est un éthoxylate cycloaliphatique à terminaison amine ou un propoxylate cycloaliphatique à terminaison amine.

9. Adhésif époxy bicomposant constitué par un composant A comprenant une résine époxyde et un composant durcisseur B, le composant durcisseur étant un composant durcisseur selon l'une quelconque des revendications 1 à 8.

10. Adhésif époxy bicomposant selon la revendication 9, **caractérisé en ce que** le composant A comprend en outre au moins un modificateur de la résistance aux impacts.

11. Adhésif époxy bicomposant selon l'une quelconque des revendications 9 à 10, **caractérisé en ce que** le composant A contient
40 à 80 % en poids d'au moins une résine époxyde,
10 à 40 % en poids d'au moins un modificateur de la résistance aux impacts,
0 à 50 % en poids de charges et/ou d'additifs thixotropiques, de préférence 5 à 50 % en poids, et
0 à 5 % en poids de promoteurs d'adhésion et/ou d'autres additifs.

12. Adhésif époxy bicomposant selon l'une quelconque des revendications 9 à 11, **caractérisé en ce que** la résine époxyde comprend un éther diglycidylique de bisphénol A, un éther diglycidylique de bisphénol F, un éther diglycidylique de bisphénol A/F, une résine époxyde novolaque ou leurs mélanges.

13. Adhésif époxy bicomposant selon l'une quelconque des revendications 10 à 12, **caractérisé en ce qu'**au moins un modificateur de la résistance aux impacts est choisi parmi :
a) un caoutchouc liquide, qui contient un modificateur de la résistance aux impacts terminé par des groupes époxyde, pouvant être obtenu par la mise en réaction d'un prépolymère à terminaison isocyanate avec une résine époxyde, qui comprend un composé époxyde contenant un groupe hydroxy primaire ou secondaire,
b) un polymère noyau-enveloppe, de préférence constitué par un noyau en un polymère d'acrylate ou de butadiène élastique et une enveloppe en un polymère thermoplastique rigide, et/ou
c) un caoutchouc noyau-enveloppe.

14. Utilisation d'un composant B en tant que composant durcisseur dans un adhésif époxy bicomposant, le composant B comprenant
B1) au moins un polyéther-amine acyclique aliphatique contenant au moins 2 groupes amino, et
B2) au moins une polyamine choisie parmi une phénalkamine ou une polyéther-amine aliphatique, qui contient au moins un segment alcoxylate acyclique et au moins un segment cycloaliphatique,
ainsi qu'éventuellement
B3) au moins un composé d'amine choisi parmi un caoutchouc à terminaison amine, un poly(tétraméthylène-éther glycol) à terminaison amine et un copolymère de poly(tétraméthylène-éther glycol)-poly(propylène glycol) à terminaison amine.

15. Utilisation d'un composant B en tant que composant durcisseur dans un adhésif époxy bicomposant selon la revendication 14, **caractérisée en ce que** le composant durcisseur est défini selon l'une quelconque des revendications 2 à 8.
